# EUROPÄISCHE PATENTSCHRIFT

(11) **EP 0 608 509 B1**
(45) Veröffentlichungstag und Bekanntmachung des Hinweises auf die Patenterteilung: **10.02.1999**
(21) Anmeldenummer: 93119166.2
(22) Anmeldetag: 29.11.1993
(51) Int. Cl.: C08L 77/00, C08K 5/00

(54) **Verfahren zur Einarbeitung von Weichmachern in Polyamide**
Process for incorporating plasticisers in polyamides
Procédé pour l'introduction de plastifiants dans des polyamides

(30) Priorität: 23.01.1993 DE 4301809
(43) Veröffentlichungstag der Anmeldung: 03.08.1994
(73) Patentinhaber: HÜLS AKTIENGESELLSCHAFT, 45764 Marl (DE)
(72) Erfinder: Mumcu, Salih, Dr., D-45772 Marl (DE); Krämer, Wiegand, D-45768 Marl (DE); Kriesten, Wolfgang, Dr., D-45770 Marl (DE); Panoch, Hans Joachim, Dr., D-45721 Haltern (DE)

(56) Entgegenhaltungen:
- EP-A- 0 325 740
- DE-A- 3 613 528
- JP-A-56 161 426
- JP-A-56 161 427
- NN-A- 6 161 427
- K. STOECKHERT ET AL. 'Kunststoff-Lexikon' 1992 , CARL HANSER VERLAG , MüNCHEN, WIEN * Seite 655 - Seite 656 * * Seite 149 * * Seite 485 *

## Beschreibung

Gegenstand der Erfindung ist ein Verfahren zur homogenen Einarbeitung von Weichmachern in feinteilige, feste Polyamide.

Polyamide sind im allgemeinen steife Produkte. Sie müssen für zahlreiche Anwendungen, beispielsweise für Schuhsohlen, Kraftstoff- und Druckluftbremsleitungen oder Kabelbinder, durch Zusatz von Weichmachern flexibilisiert werden.

Das üblichste Weichmachereinarbeitungsverfahren geht von einem Polyamidgranulat-Weichmacher-Gemisch aus. Es wird in einem Kneter aufgeschmolzen und homogenisiert. Dann drückt man die Schmelze durch eine Lochplatte, kühlt die Stränge im Wasser ab und granuliert sie. Das Verfahren ist jedoch kostspielig, da es spezielle Kneter mit entsprechenden Dosiereinrichtungen benötigt und vom Monomer bis zum weichgemachten Polymer im allgemeinen zwei Granuliert- und zwei Trocknungsschritte erfordert.

Es ist aus der DE-OS 21 53 249 auch bekannt, Weichmacher im Reaktor in die fertige Polyamidschmelze einzurühren. Nachteilig ist dabei, daß sich die hitzeempfindlichen Weichmacher bei der üblichen 5- bis 8stündigen Verweilzeit im Temperaturbereich von 220 bis 260 °C zersetzen und anschließend unerwünschte Nebenreaktionen eingehen, die zu einer Produktschädigung und Farbverschlechterung führen. Bei dieser Arbeitsweise wird außerdem der Weichmacher beim Austragen der Schmelze aus dem Reaktor in Form eines Aerosols teilweise emittiert. Hierdurch entstehen gesundheitliche Probleme bei den entsprechenden Arbeitsplätzen.

In der DE-OS 36 13 528 wird eine weitere Form von Einarbeitung in Gegenwart eines Polyalkenamers beschrieben. Flüssige Hilfs- und Zusatzstoffe werden bei höchstens 70 °C eingearbeitet. Das hier geschilderte Verfahren ist jedoch auf polyalkenamerfreie Polymere nicht anwendbar.

Nach JP-A-56 161 426 werden Polyamidgranulat und Weichmacher unter Umrühren erhitzt, oder es wird Weichmacher unter Umrühren zu erhitztem Polyamidgranulat gegeben. Dieses Verfahren führt zu Verklumpungen und Anbackungen am Trockner. Nach den Beispielen kann auch ein drehbares, rostfreies Gefäß verwendet werden. Dabei wird aber anfangs so viel Weichmacher zugesetzt, daß vorübergehend hohe Viskositäten auftreten.

Ähnlich wird in JP-A-56 161 427 verfahren. Das Verfahren ist hier aber auf Caprolactam enthaltende Copolyamide und auf 2 spezielle Weichmacher begrenzt. Auch hier treten zwischenzeitlich erhöhte Viskositäten auf.

Diese Verfahren führen, wenn man sie auf größere Mengen in technischen Taumeltrocknern anwendet, zu Agglomeraten in nicht vertretbarem Ausmaße.

Die Aufgabe der Erfindung war es daher, ein für Polyamide vielseitiges Weichmachereinarbeitungsverfahren ohne Anwendung eines Kneters bereitzustellen, durch das unter schonenden Bedingungen eine homogene Verteilung der Weichmacher im Polymer auch in technischem Maßstabe erreicht werden kann.

Diese Aufgabe wurde erfindungsgemäß dadurch gelöst, daß man die Weichmacher bei Temperaturen von mindestens 80 °C mit Hilfe einer Düse auf feinteilige, feste Polyamide aufsprüht und das Gemisch in fester Phase in einem Taumel- oder Schaufeltrockner umwälzt.

Als Weichmacher können beispielsweise p-Hydroxybenzoesäure-octylester, Benzolsulfonsäureamid, Benzolsulfonsäure-N-alkylamide, wobei die Alkylreste insgesamt 1 bis 20 C-Atome tragen, wie z. B. Benzolsulfonsäure-N-butylamid, Benzolsulfonsäure-N-octylamid oder Benzolsulfonsäure-N-cyclohexylamid, sowie Toluolsulfonsäureamid und Toluolsulfonsäure-N-alkylamide, wobei die Alkylgruppen 1 bis 20 C-Atome enthalten können, wie z. B. Toluolsulfonsäure-N-ethylamid, eingesetzt werden.

Bevorzugt werden Benzolsulfonsäure-N-alkylamide und p-Toluolsulfonsäureamid verwendet.

Im Rahmen der vorliegenden Erfindung ist eine Beschränkung der Weichmacherkonzentration nicht erforderlich. Es werden jedoch übliche Konzentrationen eingestellt. Sie liegen - bezogen auf das Polyamid - vorzugsweise bei 2 bis 25 Gewichtsprozent, insbesondere zwischen 5 und 16 Gewichtsprozent.

Die Weichmacher können einzeln oder im Gemisch eingesetzt werden.

Als Polyamide eignen sich kristalline thermoplastische Produkte mit DSC-Schmelztemperaturen von vorzugsweise mindestens 150 °C. Besonders bevorzugt werden Polyamide mit Schmelztemperaturen von 150 bis 300 °C. Die Polyamide werden bevorzugt hergestellt aus Lactamen, ω-Aminocarbonsäuren mit mindestens 6 C-Atomen im Molekül oder aus Salzen von Diaminen und Dicarbonsäuren, die im Strukturelement mindestens 12 C-Atome aufweisen. Copolyamide mit Comonomeranteilen von nicht mehr als 15 Mol-% sind ebenfalls gut einsetzbar.

Als Homopolyamide können z. B. Polyamid 6, Polyamid 66, Polyamid 69, Polyamid 612, Polyamid 1012, Polyamid 1212, Polyamid 11 sowie Polyamid 12 verwendet werden. In bevorzugter Weise eignet sich das erfindungsgemäße Verfahren für Polyamid 612, Polyamid 1012, Polyamid 11 und Polyamid 12.

Die Kennzeichnung der Polyamide (PA) entspricht internationaler Norm (H. Domininghaus, Die Kunststoffe und ihre Eigenschaften, VDI-Verlag, Seite 272, (1976).

Die genannten Polyamide sind im Rahmen der Erfindung nicht kritisch und jedem Fachmann wohl bekannt. Sie werden z. B. in Kunststoff-Handbuch, Band VI, C.-Hanser-Verlag (1966), DE-PS 21 52 194 und DE-OS 25 03 308 beschrieben. Sie sind kristallin und weisen beispielsweise folgende Vorzugsbereiche auf:

| Typ | Viskositätszahl |
|---|---|
| PA 6 | 150 - 400 |
| PA 11 | 100 - 360 |
| PA 12 | 100 - 360 |
| PA 612 | 120 - 260 |

Die aufgeführten Polyamide können nach dem erfindungsgemäßen Verfahren einzeln oder im Gemisch bzw. als Blend eingesetzt werden.

Als Copolyamide eignen sich solche, die Grundmonomere enthalten, welche zu den obengenannten Homopolyamiden führen. Als Cokomponente kommen in der Hauptsache Laurinlactam, 11-Aminoundecansäure, Caprolactam, Adipinsäure/Hexamethylendiamin, Dodecandisäure/Hexamethylendiamin, Dodecandisäure/Methylpentandiamin, Dodecandisäure/Decamethylendiamin und Dodecandisäure/lsophorondiamin in Betracht. Zu beachten ist aber, daß die Summe der Comonomeranteile nicht mehr als 15 Mol-% beträgt.

Bevorzugte Copolyamide bestehen aus Laurinlactam/Caprolactam, Laurinlactam/Adipinsäure + Hexamethylendiamin, Laurinlactam/Dodecandisäure + Decamthylendiamin und 11-Aminoundecansäure/Caprolactam und weisen einen Kristallschmelzpunkt von mindestens 150 °C auf.

Derartige Copolyamide werden z. B. in den DE-OSS 39 21 164, 23 24 160, 19 39 758 und 32 48 776 beschrieben

Die aufgeführten Copolyamide werden einzeln oder im Gemisch eingesetzt.

Die Einarbeitung der Weichmacher durch Umwälzen erfolgt vorzugsweise bei Temperaturen bis hin zu 10 °C unterhalb des Polyamidschmelzpunkts (nach DSC). Besonders bevorzugt wird dabei ein Temperaturbereich von 80 bis 180 °C, wobei in einer speziellen Ausführungsform Temperaturen von 115 bis 135 °C eingestellt werden.

Zur Einarbeitung der Weichmacher wird das Polyamid in feinteiliger, fester Form in einen Taumel- oder Schaufeltrockner eingebracht. Im Sinne der vorliegenden Erfindung sind die Polyamide feinteilig, wenn die Korngrößen im Bereich von 0,5 bis 10 mm liegen. Korngrößen von 2,5 bis 6 mm werden dabei bevorzugt.

Bei der praktischen Durchführung des Verfahren wird der Trocknerinhalt, feinteiliges Polyamid, unter Inertgasabdeckung, bevorzugt unter N₂, unter Umwälzen aufgeheizt. Die Manteltemperatur des Trockners stellt man dabei im allgemeinen auf mindestens 80 °C bis maximal 10 °C unterhalb des Polymerschmelzpunkts ein. Für Polyamidtemperaturen von 115 bis 135 °C, die besonders bevorzugt werden, wird die Manteltemperatur des Trockners auf 120 bis 140 °C gebracht. Der flüssige bzw. aufgeschmolzene Weichmacher wird mittels einer Sprühdüse innerhalb von 0,5 bis 6 Stunden, vorzugsweise in 1 bis 3 Stunden, auf das Polyamid aufgesprüht. Anschließend läßt man den geschlossenen Trockner noch 1 bis 5 Stunden, vorzugsweise 2 bis 4 Stunden, rotieren.

Danach wird unter weiterem Umwälzen entweder bis zum gewünschten Trocknungsgrad bei Normaldruck Stickstoff eingeleitet oder unter Erhöhung der Trocknermanteltemperatur in Festphase nach kondensiert.

Alternativ kann die Weichmacherzugabe in de Abkühlphase des zuvor getrockneten bzw. in Festphase nachkondensierten Granulats im obengenannten Temperaturbereich erfolgen.

Die Weichmachereinarbeitung kann auch in Gegenwart von Stabilisatoren und Verarbeitungshilfsmitteln stattfinden. Diese weiteren Additive können vor dem Aufsprühen des Weichmachers vorzugsweise zum kalten Granulat gegeben werden. Sie können aber auch im Weichmacher gelöst bzw. dispergiert auf das erwärmte Granulat mit aufgesprüht werden.

Das erfindungsgemäße Verfahren weist die genannten Nachteile der bekannten Verfahren nicht auf. Die Weichmacher werden schonend und homogen eingearbeitet. Weichmacheremissionen treten nicht auf. Ferner braucht man weder Kneter noch teure Dosiereinrichtungen. Schließlich geschieht die Einarbeitung der Weichmacher - ausgehend vom Granulat - ohne den nochmaligen Granulier- und Trocknungsschritt. Die Einarbeitung kann vorteilhafterweise im Trocknungs- bzw. Festphasennachkondensationsprozeß erfolgen.

### Beispiele

Bestimmungsmethoden:
- Viskositätszahl gemäß DIN 53 727
- Wassergehaltsbestimmung gemäß ASTM D-4019
- Schmelzpunktbestimmung mit DSC gemäß ASTM D-3418-82
- Extraktgehaltsbestimmung gemäß DIN 53 738
- HPLC-Analyse mit einem Gerät von Fa. Hewlett Packard (Typ 1090L), mit ternärem Pumpensystem PV5, Filterphotometerdetektor (Wellenlänge 269 nm), Säule: Li-Chrospher 100RP-8 (5 um)

### Beispiel 1

7 t PA-12-Granulat (DSC-Schmelztemperatur: 179 °C; Viskositätszahl: 180; Wassergehalt: 0,25 Gewichtsprozent) werden in einen Taumeltrockner (V = 20 m³) gebracht. Nach der Spülung mit Stickstoff werden 35 kg N,N'-Hexamethylen-bis-(3,5-di-tert.-butyl-4-hydroxy-hydrozimtsäureamid (IRGANOX 1098 von Ciba-Geigy, Schweiz) als Antioxidanz zugegeben. Der Trocknerinhalt wird dann bei der Drehzahl 10 Upm innerhalb von 2 Stunden homogenisiert.

Dann wird unter Stickstoffeinleiten (20 m³/h) bei einer Manteltemperatur von 170 °C aufgeheizt. Beim Erreichen der Granulattemperatur von 125 °C wird die Manteltemperatur auf 130 °C gebracht, die Stickstoffzufuhr abgestellt und der Trockner geschlossen. Dann werden 1,05 t auf 55 °C erwärmter Weichmacher Benzolsulfonsäure-N-butylamid (DELLATOL BBS von Bayer, D-5090 Leverkusen) innerhalb von 2 Stunden mittels einer Düse auf das Granulat aufgesprüht. Nach weiteren zwei Stunden wird wieder Stickstoff eingeleitet und die Manteltemperatur auf 155 °C erhöht.

Bei der Festphasennachkondensation wird dem Trockner stündlich eine Probe entnommen, um die Viskositätszahl zu bestimmen. Nach Erreichen der Viskositätszahl 190 kühlt man den Trocknerinhalt ab.

Man erhält ein farbloses und trockenes Granulat ohne agglomerierte Anteile. Die Trocknerwandung ist frei von Anbackungen. Am Granulat werden folgende Analysenwerte ermittelt:

| | |
|---|---|
| Wassergehalt: | 0,016 Gewichtsprozent |
| Viskositätszahl nach Extraktion mit Ethanol: | 224 |
| Antioxidanzgehalt gemäß HPLC: | 0,43 Gewichtsprozent (entsp. der Theorie) |
| Weichmachergehalt gemäß HPLC: | 13,0 Gewichtsprozent (entsp. der Theorie) |

### Beispiel 2

7 t PA-1012-Granulat(DSC-Schmelztemperatur: 192 °C; Viskositätszahl: 170; Wassergehalt: 0,3 Gewichtsprozent) werden in einen Taumeltrockner (V = 20 m³) gebracht. Nach der Spülung wird der Trocknerinhalt bei der Drehzahl 10 Upm bei Normaldruck unter Stickstoffeinleiten (20 m³/h) bei einer Manteltemperatur von 170 °C aufgeheizt. Nach weiteren 6 Stunden wird die Beheizung abgeschaltet. Beim Erreichen der Granulattemperatur von 128 °C wird die Manteltemperatur auf 130 °C eingestellt, die Stickstoffzufuhr abgestellt und der Trockner geschlossen. Dann werden 350 kg auf 70 °C erwärmter Weichmacher p-Toluolsulfonsäureamid innerhalb einer Stunde mittels einer Düse auf das Granulat aufgesprüht. Nach weiteren zwei Stunden wird wieder Stickstoff eingeleitet und der Trocknerinhalt abgekühlt.

Man erhält ein farbloses und trockenes Granulat ohne agglomerierte Anteile. Die Trocknerwandung ist frei von Anbackungen. Am Granulat werden folgende Analysenwerte ermittelt:

| | |
|---|---|
| Wassergehalt: | 0,04 Gewichtsprozent |
| Viskositätszahl nach der Extraktion mit Ethanol: | 190 |
| Weichmachergehalt gemäß HPLC: | 4,8 Gewichtsprozent (entsp. der Theorie) |

## Patentansprüche

1. Verfahren zur homogenen Einarbeitung von Weichmachern in Polyamide,
dadurch gekennzeichnet,
daß man die Weichmacher bei Temperaturen von mindestens 80 °C mit Hilfe einer Düse auf feinteilige, feste Polyamide aufsprüht und das Gemisch in fester Phase in einem Taumel- oder Schaufeltrockner umwälzt.

2. Verfahren nach Anspruch 1,
dadurch gekennzeichnet,
daß man bei einer Temperatur bis hin zu 10 °C unterhalb des Schmelzpunkts der Polyamide umwälzt.

3. Verfahren nach Anspruch 1,
dadurch gekennzeichnet,
daß beim Umwalzen eine Temperatur von 80 bis 180 °C eingestellt wird.

4. Verfahren nach Anspruch 1,
dadurch gekennzeichnet,
daß Polyamide mit einem DSC-Schmelzpunkt von mindestens 150 °C eingesetzt werden.

5. Verfahren nach Anspruch 1,
dadurch gekennzeichnet,
daß als Weichmacher Benzolsulfonsäure-N-alkylamide und p-Toluolsulfonsäureamid eingearbeitet werden.

## Claims

1. A process for homogeneous incorporation of plasticizers into polyamides, characterized in that the plasticizers are sprayed with the aid of a nozzle onto finely divided solid polyamides at temperatures of at least 80°C and the mixture is revolved in the solid phase in a tumble or paddle drier.

2. A process according to claim 1, characterized in that the mixture is revolved at a temperature at least 10°C below the melting point of the polyamides.

3. A process according to claim 1, characterized in that a temperature of 80 to 180°C is established during the revolving process.

4. A process according to claim 1, characterized in that polyamides having a DSC melting point of at least 150°C are employed.

5. A process according to claim 1, characterized in that benzenesulphonic acid N-alkylamides and p-toluenesulphonamide are incorporated as plasticizers.

## Revendications

1. Procédé d'intégration homogène de plastifiants dans des polyamides,
caractérisé en ce qu'
on pulvérise des plastifiants à des températures d'au moins 80°C à l'aide d'une buse sur les polyamides solides, en particules fines, et en ce qu'on fait subir au mélange en phase solide une rotation dans un appareil de séchage à nutation ou à palettes.

2. Procédé selon la revendication 1,
caractérisé en ce qu'
on effectue la rotation à une température allant jusqu'à 10°C en dessous du point de fusion des polyamides.

3. Procédé selon la revendication 1,
caractérisé en ce que
lors de la rotation on règle la température entre 80 et 180°C.

4. Procédé selon la revendication 1,
caractérisé en ce qu'
on utilise des polyamides ayant un point de fusion DSC d'au moins 150°C.

5. Procédé selon la revendication 1,
caractérisé en ce qu'
on intègre comme plastifiant les N-alkylamines de l'acide benzènesulfonique et l'amide de l'acide p-toluène sulfonique.
